# EUROPEAN PATENT APPLICATION

(11) **EP 4 113 715 A1**
(43) Date of publication of application: **04.01.2023**
(21) Application number: 21759716.0
(22) Date of filing: 25.01.2021
(51) Int. Cl.: H01M 50/20

(54) **BATTERY MODULE**

(30) Priority: 26.02.2020 JP 2020029959
(71) Applicant: MAZDA MOTOR CORPORATION, Hiroshima 730-8670 (JP); Isuzu Motors Limited, Tokyo 140-8722 (JP); Subaru Corporation, Tokyo 150-8554 (JP); Suzuki Motor Corporation, Hamamatsu-shi, Shizuoka 432-8611 (JP); TOYOTA JIDOSHA KABUSHIKI KAISHA, Toyota-shi Aichi 471-8571 (JP); HINO MOTORS, LTD., Hino-shi, Tokyo 191-8660 (JP); Yamaha Hatsudoki Kabushiki Kaisha, Iwata-shi, Shizuoka 438-8501 (JP)
(72) Inventor: KITA Hirokazu, Aki-gun, Hiroshima 730-8670 (JP); MURATA Shin, Aki-gun, Hiroshima 730-8670 (JP); MATSUI Kohei, Aki-gun, Hiroshima 730-8670 (JP); SAITO Hayato, Fujisawa-shi, Kanagawa 252-0881 (JP); MIZOGUCHI Tomo, Fujisawa-shi, Kanagawa 252-0881 (JP); SUZUKI Norio, Tokyo 150-8554 (JP); NEMORI Hiroyoshi, Hamamatsu-shi, Shizuoka 432-8611 (JP); ENDO Yuji, Ikeda-shi, Osaka 563-8651 (JP); KURODA Akira, Toyota-shi, Aichi 471-8571 (JP); TAKAYAMA Hidemasa, Hino-shi, Tokyo 191-8660 (JP); FUKUTA Takaaki, Iwata-shi, Shizuoka 438-8501 (JP)
(74) Representative: Müller-Boré & Partner Patentanwälte PartG mbB
(86) International application number: PCT/JP2021/002441
(87) International publication number: WO 2021/171861

(57) **Abstract**

A battery pack (1) includes battery cells (10), each of which has a pair of first surface portions (11) facing each other in a first direction and has a positive electrode plate (14a) and a negative electrode plate (14b) stacked so as to be arranged in the first direction, an outer shell portion (80) that houses the stacked battery cells (10), elastic members (60), each of which is provided between the battery cells (10) adjacent to each other in the first direction, and a plurality of frames (20) that fix the battery cells (10) to the outer shell portion (80). The elastic members (60) are disposed so as to cover the central portions of the first surface portions (11) and the frames (20) are disposed so as to cover an outer circumference portions of the first surface portions (11).

## Description

### Technical Field

The technology disclosed herein belongs to a technical field regarding a battery module.

### Background Art

In recent years, vehicles that move using a motor torque generated by a motor, such as electric vehicles and hybrid vehicles have become popular. Such a vehicle has a battery module that stores electric power to be supplied to a motor. Many of battery modules provided in vehicles are formed by stacking a plurality of rectangular parallelepiped battery cells.

For example, the battery module described in patent document 1 includes a cell stacked body in which a plurality of battery cells are stacked in a first direction with insulators sandwiched therebetween, a pair of end plates disposed on both side surfaces in the first direction of the cell stacked body, and a pair of side frames disposed on both side surfaces in the second direction orthogonal to the first direction of the cell stacked body, in which each of the side frames has a front flange portion that extends along the front end plate so as to close to each other and a rear flange portion that extends along the rear end plate so as to close to each other, the front flange portion is fastened to the front end plate and the rear flange portion is fastened to the rear end plate, and the battery cells are allowed to expand in the first direction due to degradation according to changes in the angles of the front flange portion and the rear flange portion.

In addition, the battery module described in patent document 2 includes battery cells, a case that houses the battery cells, a foamed coating layer sandwiched between the outer surface of the battery cells and the inner surface of the case, in which partition plates extending from the case are disposed at the positions corresponding to the outer circumference portions of the surface portions in the stacking direction of the battery cells and clearances are present in the portions corresponding to the centers of the surface portions of the battery cells.

### Citation List

### Patent Literature

Patent Literature 1: JP-A-2019-75281
Patent Literature 2: JP-A-2013-191440

### Summary of Invention

### Technical Problem

By the way, as a result of diligent study, the inventors of the present application have found that there is a correlation between the constraint force applied to the battery cells in the stacking direction and degradation of the battery cells.

Specifically, in the structure that absorbs the expansion of the battery cells using the warp of the flanges provided in the side flames as in the battery module described in patent document 1, the spring force of the flange becomes strong particularly when the battery cells expand, and the constraint force in the stacking direction becomes high. When the constraint force in the stacking direction is strong, the electrolyte solution repeatedly sinks into and exudes from the electrodes, thereby increasing the uneven concentration of the electrolyte solution. This locally increases the internal resistance and degrades the battery cells.

In contrast, the constraint force in the stacking direction is substantially zero in the central portions of the battery cells when there is a clearance between battery cells as in the battery module described in patent document 2. When the constraint force in the stacking direction is too weak, the distance between electrodes becomes uneven. This locally increases the internal resistance. In addition, in the case of an in-vehicle battery module, since vibration of a vehicle easily displaces the electrodes, connection portions between the electrode body and the terminals are loaded and damaged, thereby reducing the service life of the battery cell.

The technology disclosed herein easily extends the service life of the battery cells by setting the constraint force in the stacking direction on the battery cells to an appropriate value in a battery module in which a plurality of battery cells are stacked.

### Solution to Problem

The inventors of the present application have disposed soft members in a portion in the battery cells that are likely to expand and constrained the battery cells with a low load.

Specifically, the technology disclosed herein has a structure including battery cells, each of the battery cells including a pair of first surface portions facing each other in the first direction, a pair of second surface portions facing each other in a second direction orthogonal to the first direction, a pair of third surface portions facing each other in a third direction orthogonal to the first direction and the second direction, and an electrode body in which a positive electrode plate and a negative electrode plate are arranged in the first direction in a space formed by the first surface portions, the second surface portions, and the third surface portions; an outer shell portion that houses the stacked battery cells; elastic members, each of which is provided between the battery cells adjacent to each other in the first direction; and fixed portions that fix the battery cells to the outer shell portion, in which the elastic members are disposed so as to cover central portions of the first surface portions, and the fixed portions are disposed so as to cover outer circumference portions of the first surface portions.

That is, the central portions of the first surface portions of the battery cells are likely to expand and this expansion makes the constraint force in the stacking direction on the battery cells high. In contrast, in the structure described above, the elastic members are disposed between the adjacent battery cells in the first direction, so the elastic members deform so as to shrink according to the expansion of the central portions of the first surface portions. This can suppress an increase in loads on the battery cells due to the expansion as compared with the case in which, for example, the central portions of the first surface portions of the battery cells are covered with non-elastic members. As a result, the battery cells remain constrained with a low load. By disposing the fixed portions in the outer circumference portions of the battery cells, which are less likely to expand, it is possible to suppress an increase in displacement of the battery cells due to vibration and the fixed portions can also prevent an increase in the constraint force in the stacking direction on the battery cells. Since this prevents uneven distance between the electrodes and uneven concentration of the electrolyte solution while fixing the battery cells, an increase in the internal resistance of the battery cells is suppressed, thereby extending the service life of the battery cells.

In the battery module, the elastic members may have a size that covers the entire electrode body as seen in the first direction.

In this structure, the elastic members has a size that covers the entire electrode body, so the elastic members can appropriately constrain the portion in which the electrode body is provided. Since a load is applied to the entire electrode body evenly, a rise of the internal resistance of the battery cell can be more effectively suppressed and the service life of the battery cells can be further extended.

In the battery module, the fixed portions may include resin frames formed so as to cover outer circumference portions of the battery cells, and the battery cells may be fixed to the outer shell portion by fixing the frames to the outer shell portion with the battery cells put in the frames.

In this structure, since the fixed portions include the frames that cover the outer circumference portions of the battery cells, the frames can support the entire battery cell. In addition, since the outer circumference portions of the battery cells are less likely to expand, the internal resistance does not easily rise even when a rigid body is disposed. Accordingly, the service life of the battery cells can be further extended.

In an embodiment of the battery module, the outer shell portion includes a pair of end plates disposed so as to sandwich the entire stacked battery cells from both sides in the first direction and a pair of side plates disposed so as to sandwich the entire stacked battery cells from both sides in the second direction, the side plates extending in the first direction, and the fixed portions are located between the side plates and the battery cells and are fixed to the pair of side plates.

In this structure, since the fixed portions are fixed to the side plates, the fixed portions do not easily move in the first direction and do not cause the battery cells to generate a constraint force in the first direction. Since the fixed portions do not apply a constraint force to the battery cells, the constraint force on the battery cells are given by the elastic member. This easily sets the constraint force in the first direction on the battery cells to an appropriate value, thereby easily extending the service life of the battery cells.

In the embodiment, each of the side plates may have flange portions provided in both end portions in the first direction, the side plates extending in the first direction and then being bent toward the battery cells in the second direction, and the end plates may be coupled to the flange portion via a bolt.

Since the connection portions between the end plates and the side plates are separated from the battery cells in this structure, the connections between the end plates and the side plates hardly affect the constraint force in the first direction on the battery cells. This easily sets the constraint force in the first direction on the battery cells to an appropriate value, thereby easily extending the service life of the battery cells.

In the embodiment, the battery module may further include a cabinet to which a battery stacked body having the plurality of battery cells housed in the outer shell portion is mounted, in which each of the side plate may have a bracket that extends toward an opposite side of the battery cells in the second direction, the bracket being fixed to the cabinet, and the cabinet may have a support portion coupled to the bracket, the support portion supporting the battery stacked body.

In this structure, the side plates are less likely to deform in the first direction. This causes the side plates not to easily generate a constraint force in the first direction on the battery cells. As a result, the constraint force in the first direction on the battery cells is kept at an appropriate value, thereby further extending the service life of the battery cells.

In the embodiment in which the battery stacked body is mounted to the cabinet, a plurality of battery stacked bodies may be mounted to the cabinet with the battery stacked bodies arranged in the second direction, the battery stacked body being one of the plurality of battery stacked bodies, a plurality of brackets may be present and may be mounted to the support portion with the brackets placed on the support portion in a third direction, the bracket being one of the plurality of brackets, and the brackets provided on one side of the side plate in the second direction may be staggered with the brackets provided on the other side of the side plate in the second direction.

In this structure, the brackets of adjacent battery stacked bodies can be alternately arranged in the support portions. This reduces the distance between the mounting portions with respect to the support portions. Since the resonance frequency of the battery module increases when the distance between the mounting portions is reduced, the vibration of the battery module can be easily suppressed. In addition, since adjacent battery stacked bodies can be disposed as close as possible to each other, the entire battery module can be compact.

In the embodiment in which the battery stacked body is mounted to the cabinet, portions of the battery stacked bodies excluding the brackets may be separated from the cabinet with the battery stacked bodies supported by the support portion.

In this structure, transmission of vibration applied to the cabinet to the battery stacked body can be suppressed. This can suppress the displacement of the electrodes due to vibration, thereby further extending the service life of the battery cells.

In the battery module, a force used by each of the elastic members to press an adjacent one of the battery cells is preferably set to 1 kN to 10 kN.

As a result of study, the inventors of the present application have found that when the constraint force in the first direction on the battery cells is set to approximately 1 kN to 10 kN, even if the battery cells expand due to aged degradation, the internal resistance is nearly unchanged, which depends on the internal electrode specifications and the size of the battery cells. Accordingly, the structure described above can further extend the service life of the battery cells.

In the battery module, a length in the first direction of the battery stacked body having the plurality of battery cells housed in the outer shell portion may be equal to a length between a pair of side flames.

That is, since the battery cells only need to be constrained with a low constraint force in the first direction, the constraint force can be easily uniformed and the number of stacked battery cells can be as large as possible. Then, the battery capacity can be considerably increased by making the length in the first direction of the battery stacked body nearly equal to the length between the side frames. Accordingly, the battery capacity can be increased while the service life thereof can be extended.

### Advantageous Effects of Invention

As described above, the technology disclosed herein can extend the service life of the battery cells by setting the constraint force in the stacking direction on the battery cells to an appropriate value.

### Brief Description of Drawings

[Fig. 1] Fig. 1 is a schematic diagram illustrating the structure of a vehicle in which a battery pack according to an exemplary embodiment is disposed.
[Fig. 2] Fig. 2 is a perspective view of a battery stacked body.
[Fig. 3] Fig. 3 is an exploded perspective view of the battery stacked body.
[Fig. 4] Fig. 4 is an exploded perspective view illustrating the structure of one of battery cells.
[Fig. 5] Fig. 5 is a front view of the battery cell as seen in the stacking direction.
[Fig. 6] Fig. 6 is a sectional view of the right end portion in the stacking direction of the battery stacked body, taken along a plane parallel to the stacking direction and the vertical direction.
[Fig. 7] Fig. 7 is a plan view of the battery stacked body as seen from above.
[Fig. 8] Fig. 8 is a graph illustrating the relationship between the constraint force in the stacking direction and the internal resistance of the battery stacked body.
[Fig. 9] Fig. 9 is a perspective view illustrating the relationship between the battery stacked body and a cabinet.
[Fig. 10] Fig. 10 is an enlarged plan view, as seen from above, illustrating a mounting portion of the battery stacked body to the cabinet.
[Fig. 11] Fig. 11 illustrates a sectional view illustrating the mounting portion of the battery stacked body to the cabinet.

### Description of Embodiments

An exemplary embodiment will be described in detail below with reference to the drawings.

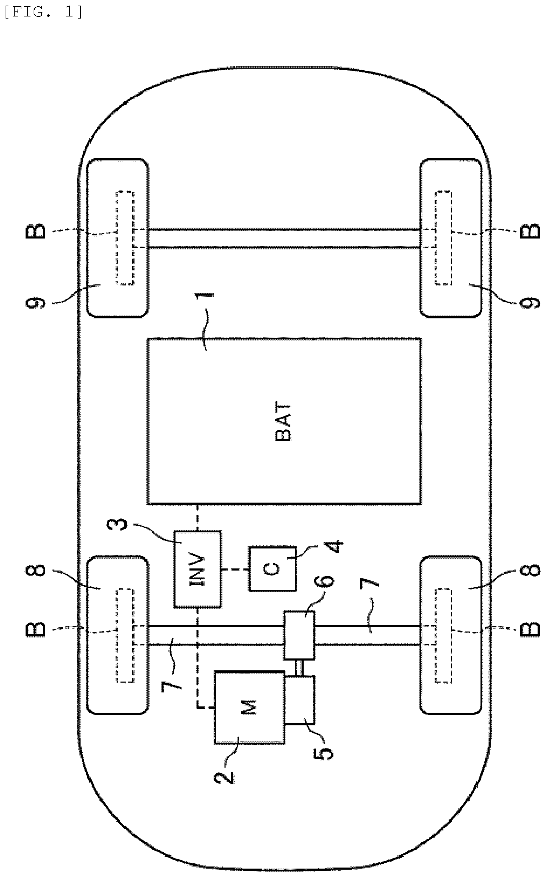

Fig. 1 schematically illustrates the structure of an electric vehicle in which a battery module according to the embodiment has been installed. The vehicle is an electric vehicle driven by only electrical energy. The vehicle has an electric motor 2 as a driving source that performs rotational driving using electric power stored in a battery pack 1 having a battery module. An inverter 3 is provided between the battery pack 1 and the electric motor 2 to convert DC electric power stored in the battery pack 1 into AC electric power and supplies the AC electric power to the electric motor 2. The inverter 3 is controlled by a controller 4 provided in the vehicle.

The electric motor 2 is ganged and coupled to a pair of left and right drive shafts 7 via a gear train 5 and a differential 6. Front wheels 8 are coupled to the outer end portions in the vehicle width direction of the drive shafts 7. That is, this vehicle is a so-called FF vehicle, in which the two left and right front wheels 8 are driving wheels and the two left and right rear wheels 9 are driven wheels.

The electric motor 2 is driven by electric power supplied by the battery pack 1 when the vehicle is travelling with the accelerator of the vehicle (not illustrated) depressed, and turns the front wheels 8. That is, when the vehicle is powered, the electric motor 2 is driven by the electric power supplied by the battery pack 1 via the inverter 3, and the driving force by the electric motor 2 is transmitted to the front wheels 8 via the gear train 5, the differential 6, and the drive shafts 7.

In the vehicle, each of the front wheel 8 and the rear wheel 9 has a brake device B that applies a braking force by friction. The brake system B may be hydraulic or electric.

### <Battery stacked body>

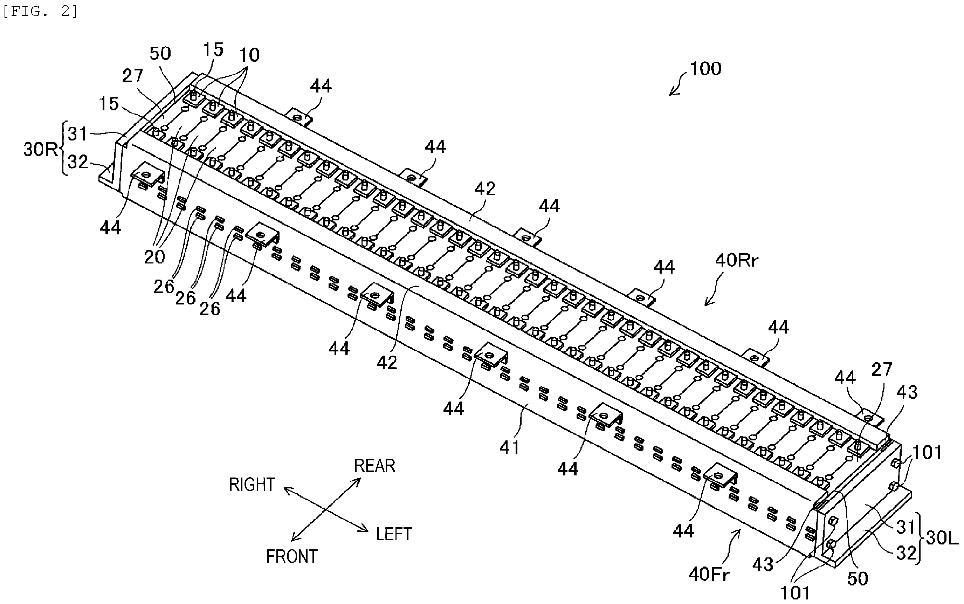

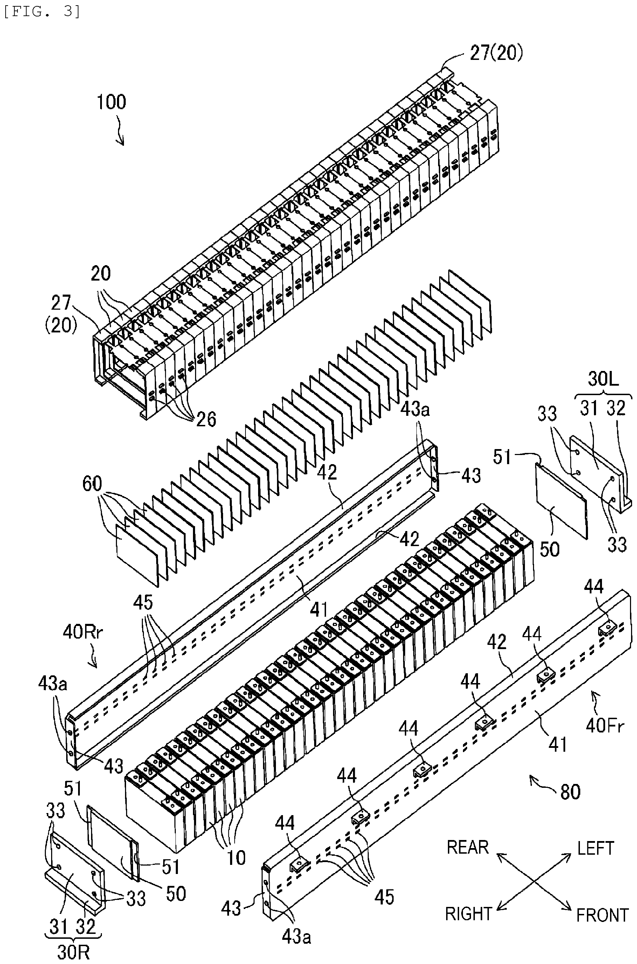

As illustrated in Figs. 2 and 3, the battery pack 1 has a battery stacked body 100 in which a plurality of battery cells 10 are stacked. The number of the stacked battery cells 10 is, for example, 36 to 40. In the embodiment, the battery stacked body 100 is disposed in the vehicle so that the left-right direction (that is, the vehicle width direction) is aligned with the stacking direction of the battery cells 10. The length in the stacking direction of the battery stacked body 100 is equal to the length between a pair of left and right side frames. In the following description, the stacking direction is often referred to as the left-right direction simply and the direction orthogonal to the left-right direction and the vertical direction is often referred to as the front-rear direction. In this case, the left-right direction is equivalent to a first direction, the front-rear direction is equivalent to a second direction, and the vertical direction is equivalent to a third direction. It should be noted that the stacking direction of the battery cells 10 is not limited to the left-right direction. The stacking direction of the battery cells 10 may be the front-rear direction.

The battery stacked body 100 has an outer shell portion 80 (see particularly Fig. 3) that houses the stacked battery cells 10. The outer shell portion 80 includes a pair of end plates 30 disposed so as to sandwich the entire stacked battery cells 10 from both sides in the left-right direction and a pair of side plates 40 disposed so as to sandwich the entire stacked battery cells 10 extending in the left-right direction from both sides in the front-rear direction. The battery stacked body 100 has a plurality of frames 20 that fix the battery cells 10 to the outer shell portion 80. In the following description, the end plate 30 on the left side is referred to as a left end plate 30L, the end plate 30 on the right side is referred to as a right end plate 30R, the side plate 40 on the front side is referred to as a front side plate 40Fr, and the side plate on the rear side is referred to as a rear side plate 40Rr. When the left and right end plates 30L and 30R are not distinguished from each other, the left and right end plates 30L and 30R are simply referred to as the end plates 30. When the front and rear side plates 40Fr and 40Rr are not distinguished from each other, the front and rear side plates 40Fr and 40Rr are simply referred to as the side plates 40.

### <Battery cells>

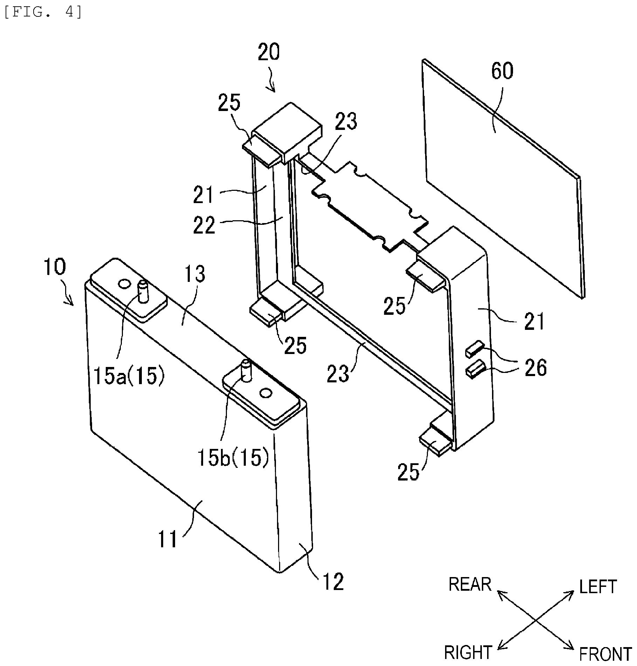

The battery cells 10 are lithium-ion batteries. As illustrated in Fig. 4, each of the battery cells 10 has a rectangular parallelepiped shape flattened in the left-right direction. The battery cell 10 has a pair of first face portions 11 facing each other in the left-right direction, a pair of second face portions 12 facing each other in the front-rear direction, and a pair of third face portions 13 facing each other in the vertical direction. The area of the first face portions 11 is much larger than the area of the second face portions 12 and the area of the third face portions 13. The first face portions 11, the second face portions 12, and the third face portions 13 are made of, for example, aluminum or aluminum alloy.

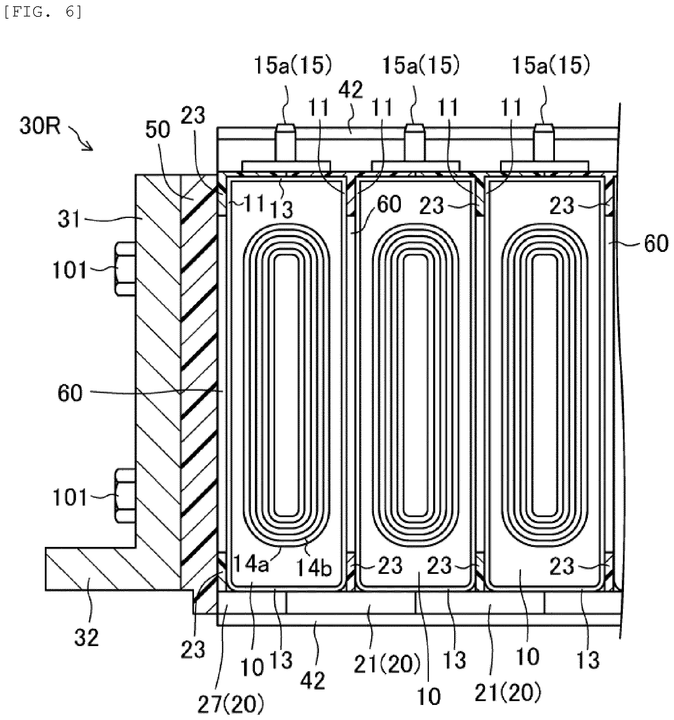

As illustrated in Fig. 6, each of the battery cells 10 houses an electrolyte solution and an electrode body 14 immersed in the electrolyte solution in the space formed by the first face portions 11, the second face portions 12, and the third face portions 13. The electrode body 14 is formed as a flat circle by spiraling a positive electrode plate 14a and a negative electrode plate 14b and compressing these electrode plates radially. This arranges the positive electrode plates 14a and the negative electrode plates 14b alternately in the left-right direction.

The upper third face portion 13 of each of the battery cells 10 has a pair of electrode terminals 15. The electrode terminals 15 include a positive terminal 15a connected to the positive electrode plate 14a and a negative terminal 15b connected to the negative electrode plate 14b. The electrode terminals 15 project upward from the upper third face portion 13. Although not illustrated in the diagram, the electrode terminals 15 of the adjacent battery cells 10 are connected in series to each other by a busbar. One end portion of the busbar is joined to the positive terminal 15a of the battery cell 10 and the other end portion of the busbar is joined to the negative terminal 15b of the adjacent battery cell 10.

### <Frame>

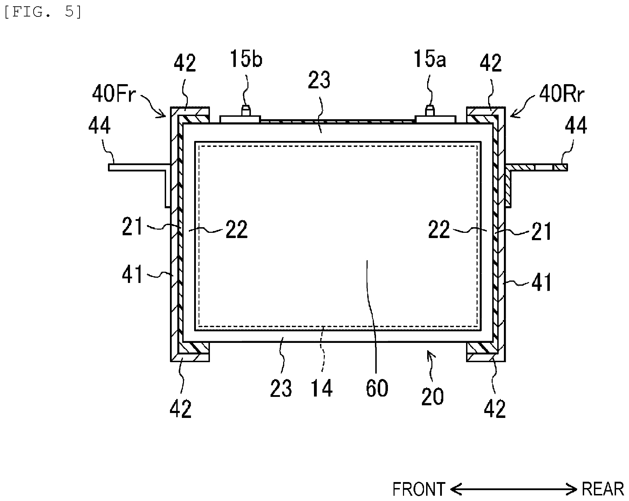

As illustrated in Figs. 3 and 4, the frames 20 house the battery cells 10 individually. The frames 20 are made of a resin material such as polypropylene, polycarbonate, or polybutylene terephthalate. Each of the frames 20 has a pair of front and rear frame bodies 21 that fix the battery cell 10. The pair of frame bodies 21 are U-shaped and disposed with the U-shaped openings facing each other. As illustrated in Figs. 2 and 5, the frame bodies 21 cover the entire second face portions 12 of the battery cell 10 and the end portions in the front-rear direction of the third face portions 13 with the two adjacent frames 20 coupled to each other. The distance between the middle portions in the vertical direction of the pair of frame bodies 21 is substantially the same as the length (the length in the front-rear direction) of the long sides of the first face portions 11 of the battery cell 10. In addition, the distance between the upper end portion and the lower end portion of each of the frame bodies 21 is substantially the same as the length (the length in the vertical direction) of the short sides of the first face portions 11 of the battery cell 10.

As illustrated in Figs. 4 and 5, first partition walls 22 for partitioning the adjacent battery cells 10 in the left-right direction are provided on the inner side of the frame bodies 21. Each of the first partition walls 22 is located in the middle in the width direction of the frame body 21 and extends in the vertical direction. The lower end portions of the first partition walls 22 are coupled to each other and the upper end portions of the first partition walls 22 are coupled to each other by second partition walls 23 that extend in the front-rear direction and partition the adjacent battery cells 10 from each other in the left-right direction. That is, the pair frame bodies 21 are coupled to each other by the second partition walls 23. The first and second partition walls 22 and 23 are disposed so as to cover the outer circumference portions of the first face portions 11 (see particularly Fig. 4). The first and second partition walls 22 and 23 have the same thickness, which is approximately 2 to 3 mm.

Each of the frame bodies 21 has, in the upper end portion and the lower end portion, coupling portions 25 for coupling to an adjacent frame 20. The coupling portion 25 has a male-female structure. In the example illustrated in Fig. 4, the male portions are formed on the left side and the female portions (not illustrated) are formed on the left side. The male portions are inserted into the female portions of the adjacent frame 20, thereby joining the adjacent frames 20 to each other, as illustrated in Fig. 3.

As illustrated in Fig. 6, when the adjacent frames 20 are coupled to each other, the distance between the second partition walls 23 adjacent to each other in the left-right direction is substantially the same as the width in the left-right direction of the battery cell 10. Accordingly, the battery cell 10 sandwiched between the two frames 20 cannot easily move in the left-right direction. That is, the battery cell 10 is fixed to the outer shell portion by the second partition walls 23. The second partition walls 23 are disposed adjacent in the vertical direction to the elastic member 60, which will be described later.

The outer surface of each of the frame bodies 21 is provided with claw portions 26. The claw portions 26 fix the frame 20 to the side plate 40. The claw portions 26 are inserted into the engagement holes 45 provided in the side plate 40 and caught by a main surface portion 41 of the side plate 40. Accordingly, the frames 20 are located between the side plates 40 and the battery cells 10 and are fixed to the pair of side plates 40, as illustrated in Fig. 5. It should be noted that that the method of fixing the frames 20 to the side plates 40 is not limited to the method using the claw portions 26 as described above. The frames 20 may be fixed to the side plates 40 by bolts or adhesion.

As illustrated in Fig. 6, end frames 27 are used for the battery cells 10 located at both ends in the left-right direction. The end frame 27 has the same basic structure as the normal frame 20 except that the frame body 21 is interrupted in the first and second partition walls 22 and 23. Fig. 6 illustrates the end frame 27 on the right side. The end frame 27 on the left side is symmetrical with respect to the end frame 27 on the right side.

### <Outer shell portion>

The end plate 30 is formed by bending a metal plate made of, for example, aluminum or aluminum alloy into an L-shape, as illustrated in Figs. 2 and 3. Specifically, the end plate 30 includes a main surface portion 31 extending in the vertical direction and a bottom surface portion 32 extending in the left-right direction from the lower end portion of the main surface portion 31. The bottom surface portion 32 of the left end plate 30L extends from the lower end portion of the main surface portion 31 to the left side and the bottom surface portion 32 of the right end plate 30R extends from the lower end portion of the main surface portion 31 to the right side. As illustrated in Fig. 3, the main surface portion 31 of each of the end plates 30 has two bolt holes 33 in each of the both end portions in the front-rear direction. The bolt holes 33 are formed separately from each other in the vertical direction.

Each of the side plates 40 has a rectangular main surface portion 41 extending in the front-rear direction. Each of the side plates 40 has first flange portions 42 extending from the both end portions in the vertical direction of the main surface portion 41 toward the battery cells 10. Specifically, the first flange portions 42 of the front side plate 40Fr extend from both end portions in the vertical direction of the main surface portion 41 toward the rear, and the first flange portions 42 of the rear side plate 40Rr extend from the both end portions in the vertical direction of the main surface portion 41 toward the front. As illustrated in Fig. 5, the main surface portion 41 and the first flange portions 42 cover the frame bodies 21 of the frames 20 from outside.

Each of the side plates 40 has second flange portions 43 that extend from the both end portions in the left-right direction of the main surface portion 41 to the left and the right and then bend and extend toward the battery cells 10. Specifically, the second flange portions 43 of the front side plate 40Fr extend from the both end portions in the left-right direction of the main surface portion 41 to the left and right and then extend toward the rear. On the other hand, the second flange portions 43 of the rear side plate 40Rr extend from the both end portions in the left-right direction of the main surface portion 41 to the left and the right and then extend toward the front. Each of the second flange portions 43 has two bolt holes 43a. The two bolt holes 43a are formed separately from each other in the vertical direction so as to correspond to the bolt holes 33 of the end plate 30. When the end plate 30 and the side plate 40 are coupled to each other, the end plate 30 is first brought into contact with the second flange portion 43 so that the bolt holes 33 of the end plate 30 communicate with the bolt holes 43a of the second flange portion 43. Then, bolts 101 are tightened into the bolt holes 33 and 43a.

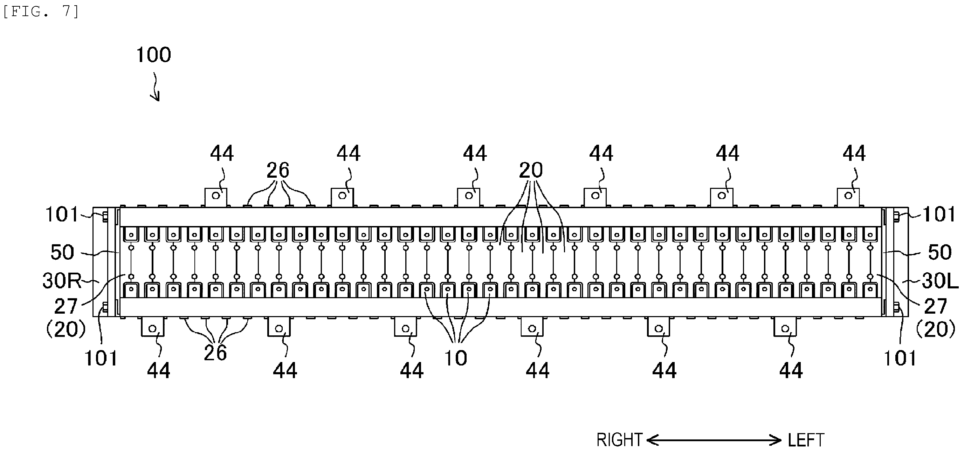

As illustrated in Figs. 5 and 7, each of the side plates 40 has a plurality (six in Fig. 7) of brackets 44 that extend toward the opposite side of the battery cells 10 in the front-rear direction. Each of the brackets 44 is formed by bending an aluminum plate into an L-shape. One surface portion of the bracket 44 is welded to the main surface portion 41 of the side plate 40 and the other surface portion of the bracket 44 has a hole. The brackets 44 provided in the front side plate 40Fr are staggered with the brackets 44 provided in the rear side plate 40Rr. Specifically, the bracket 44 of the rear side plate 40Rr is disposed in a staggered manner in the portion corresponding to the middle of two adjacent brackets 44 of the front side plate 40Fr. Although described in more detail later, the brackets 44 are used to mount the battery stacked body 100 to the cabinet 70 described later.

As illustrated in Fig. 6, a spacer 50 is provided between the end plate 30 on the right side and the end frame 27 on the right side. The spacer 50 has approximately the same area as the first surface portion 11 of the battery cell 10. As illustrated in Fig. 7, step portions 51 onto which the second flange portions 43 of the side plates 40 are fitted are formed in the both end portions in the front-rear direction of the spacer 50. The spacer 50 on the left side also has the same structure.

### <Elastic member>

As a result of diligent study, the inventors of the present application have found that there is a correlation between the constraint force (that is, the force for pressing the battery cells 10 in the stacking direction) in the stacking direction (here, the left-right direction) of the battery cells 10 on the battery cells 10 and the degradation of the battery cells 10.

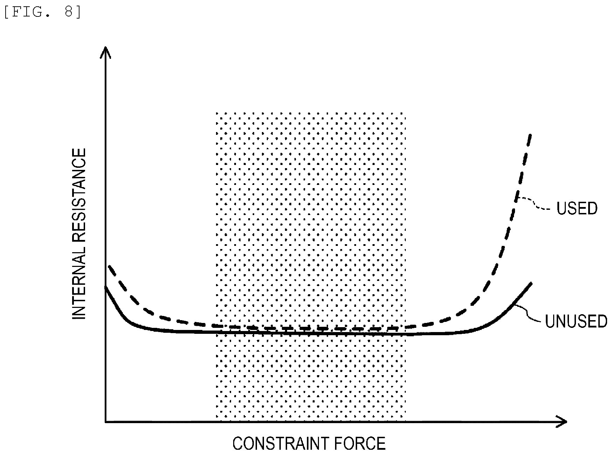

Fig. 8 illustrates the relationship between the constraint force in the stacking direction on the battery cells 10 and the internal resistance of the battery cells 10. The horizontal axis represents the constraint force in the stacking direction on the battery cells 10 and the vertical axis represents the internal resistance generated in the battery cells 10. The solid line represents unused battery cells 10 and the dashed line represents used battery cells 10.

It can be seen from Fig. 8 that the relationship between the constraint force in the stacking direction on the battery cells 10 and the internal resistance of the battery cells 10 is like a so-called bathtub curve regardless of whether the battery cells 10 are unused or used to some extent. Specifically, it can be seen that the internal resistance rises in the region in which the constraint force in the stacking direction on the battery cells 10 is excessively large and the region in which the constraint force in the stacking direction on the battery cells 10 is excessively small. When the constraint force in the stacking direction is excessively large, the electrolyte solution repeatedly sinks into and exudes from the electrode body 14 in the battery cell 10, thereby increasing the uneven concentration of the electrolyte solution. This locally increases the internal resistance. In contrast, when the constraint force in the stacking direction is too small, the distance between the positive electrode plate 14a and the negative electrode plate 14b becomes uneven. This locally increases the internal resistance. When the battery pack 1 is installed in a vehicle as in the embodiment, the connection portions between the electrode body 14 and the electrode terminals 15 may be overloaded and damaged because the electrode body 14 is easily displaced by vibration of the vehicle.

In particular, when the constraint force is excessively large, the internal resistance markedly increases for the battery cell 10 used to some extent. When a Li-ion battery such as the battery cells 10 continues to be charged, lithium ions are accumulated on the negative electrode plate 14b. The electrode body 14 becomes larger by the lithium ions and the battery cells 10 expand in the stacking direction. This further increases the constraint force in the stacking direction and sharply raises the internal resistance as illustrated in Fig. 8.

In contrast, as illustrated by hatching in Fig. 8, when the constraint force in the stacking direction on the battery cells 10 is set to an appropriate value, the internal resistance can be maintained at a low level even if the battery cell 10 degrades to some extent. As a result of study, the inventors of the present application have found that the internal resistance of the battery cells 10 can be maintained at a low level by setting the constraint force in the stacking direction on the battery cells 10 to a value from 1 kN to 10 kN.

Accordingly, in the embodiment, the elastic member 60 is provided between the battery cells 10 that are adjacent to each other in the left-right direction (stacking direction). This elastic member 60 is formed by, for example, a foam filler, a gel member, a rubber member, a resin material, or the like. As illustrated in Fig. 5, the elastic member 60 is disposed so as to cover the central portion of the first surface portion 11 as seen in the left-right direction. The elastic member 60 has a size that covers the entire electrode body 14 as seen in the left-right direction. Specifically, when the elastic member 60 is sandwiched between the battery cells 10, the elastic member 60 has a rectangular shape as seen in the left-right direction and has a long side that is larger than or equal to the length in the direction (front-rear direction) of the winding axis of the electrode body 14 and a short side that is larger than or equal to the length in the vertical direction of the electrode body 14.

As illustrated in Fig. 5 and 6, the elastic member 60 is located at the same position in the left-right direction as the first and second partition walls 22 and 23. The elastic member 60 is disposed in the region surrounded by the first and the second partition walls 22 and 23. The elastic member 60 has a thickness larger than that of the first and second partition walls 22 and 23 in an unloaded state. The elastic member 60 has the same thickness as that of the first and second partition walls 22 and 23 when sandwiched and pressed by the battery cells 10 from both sides in the left-right direction. The elastic member 60 presses the battery cells 10 located on the left and right sides with a repulsive force caused when pressed by the battery cells 10 on both sides in the left-right direction. The pressing force with which the elastic member 60 presses the adjacent battery cells 10 at this time is set to a value from 1 kN to 10 kN. This can set the constraint force in the stacking direction on the battery cell 10 to a value from 1 kN to 10 kN.

Each of the elastic members 60 disposed at the left and right ends of the battery stacked body 100 is sandwiched by the spacer 50 and the battery cell 10 in the left-right direction. At this time, the elastic members 60 need to apply, to the battery cells 10 at the ends, the same repulsive force as when the elastic members 60 are sandwiched between the battery cells 10. This can be done by, for example, causing the spacer 50 to have a hollow box shape similar to the battery cell 10 and the surface portions in the left-right direction to have the same material and thickness as the first surface portions 11 of the battery cell 10.

The constraint force of the elastic members 60 on the battery cells 10 can be adjusted by changing the material of the elastic members 60 and the thickness of the elastic members 60 relative to the thickness of the first and second partition walls 22 and 23. That is, an increase in the thickness of the elastic member 60 under no load increases a repulsive force of the elastic member 60 when the elastic member 60 is sandwiched between the battery cells 10 so as to have the same thickness as the first and second partition walls 22 and 23. This can adjust the constraint force of the elastic members 60 on the battery cells 10. The thickness of the elastic member 60 only needs to be adjusted to a thickness that allows the constraint force in the stacking direction on the battery cells 10 to be set to a value from 1 kN to 10 kN according to Hooke's law depending on the spring constant of the material of the elastic member 60.

As described above, when the battery pack 1 continues to be charged, the battery cells 10 expand in the stacking direction. When the battery cells 10 expand in the stacking direction, the constraint force of the elastic members 60 on the battery cells 10 changes. Accordingly, the material and thickness of the elastic members 60 are preferably selected so that the constraint force of the elastic members 60 on the battery cells 10 becomes a value from 1 kN to 10 kN even when the battery cells 10 expand in the stacking direction.

As described above, the internal resistance of the battery cells 10 can be as low as possible by setting the constraint force on the battery cells 10 to an appropriate value. This can extend the service life of the battery cells 10.

### <Battery pack>

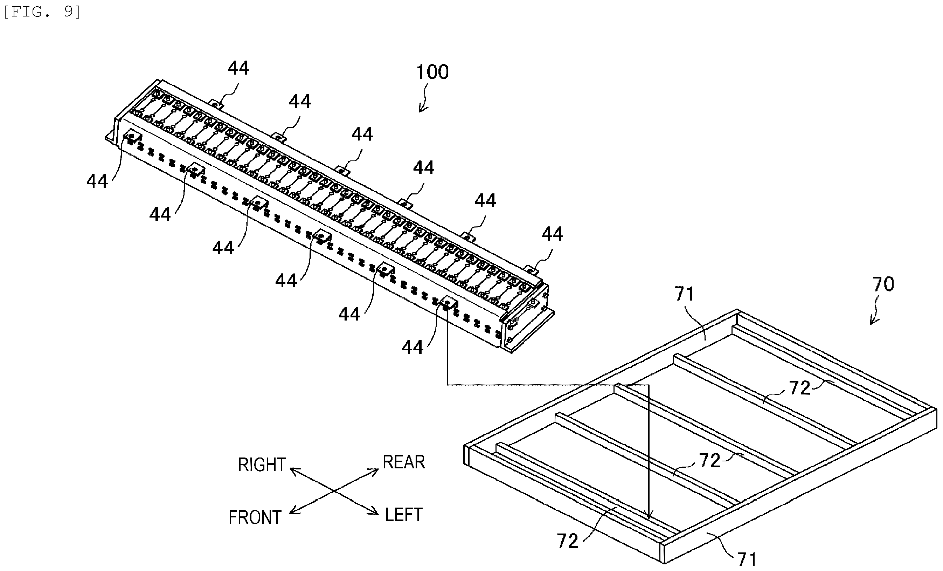

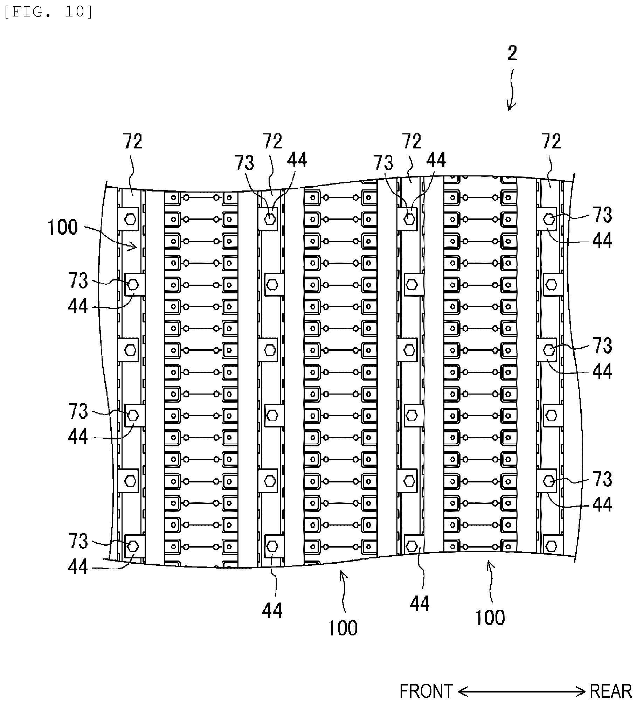

In the battery pack 1, the battery stacked body 100 constructed as described above is mounted to the cabinet 70 made of a resin. As illustrated in Fig. 9, the cabinet 70 is box-shaped and a plurality (five in Fig. 9) of cross members 72 that extend so as to couple side wall portions 71 arranged in the left-right direction are provided in parallel to the front-rear direction. As illustrated in Fig. 10, the battery pack 1 is mounted to the cabinet 70 with the plurality of battery stacked bodies 100 arranged in the front-rear direction. It should be noted that, although not illustrated in the diagram, the cabinet 70 has a lid member that covers the battery stacked bodies 100 from above with the battery stacked bodies 100 mounted to the cabinet 70.

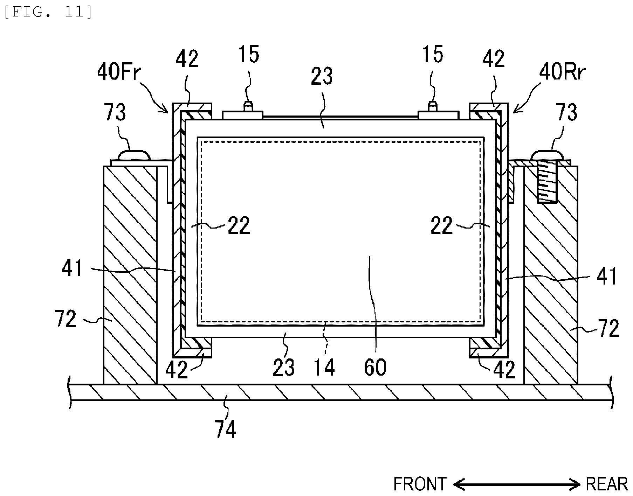

As illustrated in Fig. 11, the brackets 44 of the side plates 40 are placed on the cross members 72 from above. In addition, the battery stacked bodies 100 are supported by the cross members 72 by passing bolts 73 through the holes of the brackets 44 and tightening the bolts 73 to the cross members 72. That is, the cross members 72 correspond to the support portions that are coupled to the brackets 44 of the side plates 40 and support the battery stacked bodies 100.

Since the brackets 44 provided in the front side plate 40Fr are staggered with the brackets 44 provided in the rear side plate 40Fr as illustrated in Fig. 10, a bracket 44 of one battery stacked body 100 can be disposed between brackets 44 of an adjacent battery stacked body 100. Accordingly, the width of the cross member 72 can be as small as possible and the cabinet 70 can be compact. As a result, the entire battery pack 1 can be compact. In addition, the distance between the mounting portions of the battery stacked body 100 with respect to the cross members 72 is reduced. Since the resonance frequency of the battery stacked body 100 becomes high when the distance between the mounting portions is reduced, the vibration of the battery stacked body 100 can be easily suppressed.

In addition, as illustrated in Fig. 11, when the battery stacked body 100 is supported by the cross members 72, the battery stacked body 100 is separated from a bottom wall portion 74 of the cabinet 70. This can make the contact points between the cabinet 70 and the battery stacked body 100 as few as possible. As a result, the transmission of vibration of the vehicle to the battery cells 10 can be suppressed as much as possible.

### <Conclusion>

Accordingly, in the embodiment, the battery pack 1 includes the plurality of battery cells 10 stacked in the left-right direction, each of the battery cells 10 including the pair of first surface portions 11 facing each other in the left-right direction (stacking direction), the pair of second surface portions 12 facing each other in the front-rear direction, the pair of third surface portions 13 facing each other in the vertical direction, and the electrode body 14 in which the positive electrode plate 14a and the negative electrode plate 14b are arranged in the left-right direction in the space formed by the first surface portions 11, the second surface portions 12, and the third surface portions 13; the outer shell portion 80 that houses the stacked battery cells 10; the elastic members 60, each of which is provided between the battery cells 10 adjacent to each other in the left-right direction (stacking direction); and the plurality of frames 20 that fix the battery cells 10 to the outer shell portion 80, in which the elastic members 60 are disposed so as to cover the central portions of the first surface portions 11. In this structure, the central portions of the first surface portions 11 of the battery cells 10 are likely to expand and this expansion increases the constraint force in the stacking direction on the battery cells 10. In contrast, in the embodiment, the elastic members 60 deform so as to shrink according to the expansion of the central portions of the first surface portions 11. This can suppress an increase in loads on the battery cells 10 due to the expansion as compared with the case in which, for example, the central portions of the first surface portions 11 of the battery cells 10 are covered with non-elastic members. As a result, the battery cells 10 remain constrained with a low load. In addition, since the battery cells 10 are supported by the outer shell portion 80 via the frames 20, the displacement of the battery cells 10 due to vibration is also suppressed. In particular, the displacement in the left-right direction (stacking direction) of the battery cells 10 can be effectively suppressed by disposing the first and second partition walls 22 and 23 of the frames 20 in the outer circumference portions of the first surface portions 11 of each of the battery cells 10, which is less likely to expand. As a result, uneven concentration of the electrolyte solution and uneven distance between the electrode plates 14a and 14b are suppressed while the battery cells 10 are fixed. Accordingly, an increase in the internal resistances of the battery cells 10 are suppressed, thereby extending the service life of the battery cells 10.

In addition, since the first and second partition walls 22 and 23 are disposed in the outer circumference portions of the first surface portions 11 of each of the battery cells 10, which is less likely to expand, the first and second partition walls 22 and 23 are also prevented from being damaged by the expansion of the battery cells 10.

In addition, since the second partition walls 23 are disposed adjacent to the elastic member 60 in the vertical direction, the battery module can be compact. In addition, since the expansion of the battery cells 10 in the battery pack 1 is absorbed by the elastic members 60 in the embodiment, the length in the left-right direction of the battery pack 1 does not change. Accordingly, a displacement-absorbing mechanism, which is generally disposed in the fixed portion of the battery pack 1, does not need to be installed, so the battery pack 1 can be compact.

In particular, in the embodiment, the elastic members 60 have a size that covers the entire electrode body 14 as seen in the left-right direction. This can appropriately constrain the portions of the battery cells 10 in which the electrode bodies 14 are provided. As a result, a rise of the internal resistance of the battery cells 10 can be more effectively suppressed and the service life of the battery cells 10 can be further extended.

In addition, in the embodiment, the frames 20 are formed so as to cover the outer circumference portions of the battery cells 10 and the battery cells 10 are fixed to the outer shell portion 80 by fixing the frames 20 to the outer shell portion 80 with the battery cells 10 put in the frames 20. Accordingly, the entire battery cells 10 can be supported by the frames 20. As a result, the battery cells 10 can be prevented from being moved and broken due to vibration of the vehicle or the like. In addition, since the outer circumference portions of the battery cells 10 are less likely to expand, the internal resistance does not easily rise even when a rigid body is disposed. Accordingly, the service life of the battery cells 10 can be further extended.

In addition, in the embodiment, the outer shell portion 80 includes the pair of end plates 30 disposed so as to sandwich the entire stacked battery cells 10 from both sides in the left-right direction and the pair of side plates 40, extending in the left-right direction, that is disposed so as to sandwich the entire stacked battery cells 10 from both sides in the front-rear direction, and the frames 20 are located between the side plates 40 and the battery cells 10 and are fixed to the pair of side plates 40. Since the frames 20 are fixed to the side plates 40, the frames 20 does not easily move in the left-right direction and does not generate a constraint force in the left-right direction on the battery cells 10. Since the frames 20 do not apply a constraint force to the battery cells 10, the constraint force on the battery cells 10 are given by the elastic members 60. Accordingly, the constraint force in the left-right direction on the battery cells 10 can be easily set to an appropriate value and the service life of the battery cells 10 can be easily extended.

In addition, in the embodiment, each of the side plates 40 has the second flange portions 43 that are provided in both end portions in the left-right direction, extend in the left-right direction, and are bent toward the battery cells 10 in the front-rear direction, and the end plates 30 are coupled to the second flange portions 43 via bolts. Since the connection portions between the end plates 30 and the side plates 40 are separated from the battery cells 10, the connections between the end plates 30 and the side plates 40 hardly affect the constraint force in the left-right direction on the battery cells 10. Accordingly, the constraint force in the left-right direction on the battery cells 10 can be easily set to an appropriate value and the service life of the battery cells 10 can be easily extended.

### (Other embodiments)

The technology disclosed herein is not limited to the embodiment described above and may be another embodiment without departing from the scope of the claims.

For example, in the embodiment described above, the elastic member 60 has a size that covers the entire electrode body 14 as seen in the stacking direction (left-right direction). The technology is not limited to the embodiment and the size of the elastic member 60 may be slightly smaller than that of the electrode body 14 as seen in the stacking direction.

In the embodiment described above, the length in the stacking direction of the battery stacked body 100 is equal to the length between the pair of side frames. The technology is not limited to this embodiment and the length in the stacking direction of the battery stacked body 100 may be smaller than the length between the pair of side frames.

The embodiment described above is only an example and the scope of the present disclosure should not be interpreted in a limited manner. The scope of the present disclosure is defined by the claims, and any variations or changes that fall within the equivalent scope of the claims fall within the scope of the present disclosure.

### Industrial Availability

The technology disclosed herein is useful for a battery module including a plurality of battery cells stacked in a first direction, each of the battery cells including a pair of first surface portions facing each other in the first direction, a pair of second surface portions facing each other in a second direction orthogonal to the first direction, a pair of third surface portions facing each other in a third direction orthogonal to the first direction and the second direction, and an electrode body in which a positive electrode plate and a negative electrode plate are disposed in the first direction in a space formed by the first surface portions, the second surface portions, and the third surface portions.

### Reference Signs List

- 1:: battery pack
- 10:: battery cell
- 11:: first surface portion
- 12:: second face portion
- 13:: third surface portion
- 14:: electrode body
- 14a:: positive electrode plate
- 14b:: negative electrode plate
- 20:: frame (fixed portion)
- 30:: end plate
- 40:: side plate
- 43:: second flange portion
- 44:: bracket
- 70:: cabinet
- 72:: cross member (support portion)
- 80:: outer shell portion
- 100:: battery stacked body
- 101:: bolt

## Claims

1. A battery module comprising:
a plurality of battery cells stacked in a first direction, each of the battery cells including a pair of first surface portions facing each other in the first direction, a pair of second surface portions facing each other in a second direction orthogonal to the first direction, a pair of third surface portions facing each other in a third direction orthogonal to the first direction and the second direction, and an electrode body in which a positive electrode plate and a negative electrode plate are arranged in the first direction in a space formed by the first surface portions, the second surface portions, and the third surface portions;
an outer shell portion that houses the stacked battery cells;
elastic members, each of which is provided between the battery cells adjacent to each other in the first direction; and
fixed portions that fix the battery cells to the outer shell portion,
wherein the elastic members are disposed so as to cover central portions of the first surface portions, and
the fixed portions are disposed so as to cover outer circumference portions of the first surface portions.

2. The battery module according to claim 1,
wherein the elastic members have a size that covers the entire electrode body as seen in the first direction.

3. The battery module according to claim 1 or 2,
wherein the fixed portions include resin frames formed so as to cover outer circumference portions of the battery cells, and
the battery cells are fixed to the outer shell portion by fixing the frames to the outer shell portion with the battery cells put in the frames.

4. The battery module according to any one of claims 1 to 3,
wherein the outer shell portion includes a pair of end plates disposed so as to sandwich the entire stacked battery cells from both sides in the first direction and
a pair of side plates disposed so as to sandwich the entire stacked battery cells from both sides in the second direction, the side plates extending in the first direction, and
wherein the fixed portions are located between the side plates and the battery cells and are fixed to the pair of side plates.

5. The battery module according to claim 4,
wherein each of the side plates has flange portions provided in both end portions in the first direction, the flange portions extending in the first direction and then being bent toward the battery cells in the second direction, and
wherein the end plates are coupled to the flange portions via bolts.

6. The battery module according to claim 4 or 5, further comprising:
a cabinet to which a battery stacked body having the plurality of battery cells housed in the outer shell portion is mounted,
wherein each of the side plates has a bracket that extends toward an opposite side of the battery cells in the second direction, the bracket being fixed to the cabinet, and
the cabinet has a support portion coupled to the bracket, the support portion supporting the battery stacked body.

7. The battery module according to claim 6,
wherein a plurality of battery stacked bodies are mounted to the cabinet with the battery stacked bodies arranged in the second direction, the battery stacked body being one of the plurality of battery stacked bodies,
a plurality of brackets are present and are mounted to the support portion with the brackets placed on the support portion in a third direction, the bracket being one of the plurality of brackets, and
the brackets provided on one side of the side plate in the second direction are staggered with the brackets provided on the other side of the side plate in the second direction.

8. The battery module according to claim 6 or 7,
wherein portions of the battery stacked bodies excluding the brackets are separated from the cabinet with the battery stacked bodies supported by the support portion.

9. The battery module according to any one of claims 1 to 8,
wherein a force used by each of the elastic member to press an adjacent one of the battery cells is set to 1 kN to 10 kN.

10. The battery module according to any one of claims 1 to 9,
wherein the battery module is installed in a vehicle, and a length in the first direction of the battery stacked body having the plurality of battery cells housed in the outer shell portion is equal to a length between a pair of side flames.
